# EUROPEAN PATENT SPECIFICATION

(11) **EP 1 747 726 B1**
(45) Date of publication and mention of the grant of the patent: **19.11.2014**
(21) Application number: 06015540.5
(22) Date of filing: 26.07.2006
(51) Int. Cl.: A21C 11/20

(54) **Household appliance for drawing fresh pasta**
Hausgerät zum Extrudieren von frischen Teigwaren.
Appareil domestique pour l'extrusion de pâte alimentaire fraîche

(30) Priority: 28.07.2005 IT PD20050230
(43) Date of publication of application: 31.01.2007
(73) Proprietor: Marcato S.p.A., 35011 Campodarsego PD (IT)
(72) Inventor: Marcato, Pietro, 35011 Campodarsego PD (IT)

(56) References cited:
- CH-A- 133 458
- CN-Y- 2 199 739
- DE-A1- 19 738 996
- FR-A- 865 108
- FR-A- 2 470 544
- US-A- 4 406 603

## Description

The subject matter of this patent is a household appliance for drawing fresh pasta.

It is known that household appliances for drawing fresh pasta that are currently available on the market are normally formed of a fairing containing a compartment that holds the internal worm screw, connected to an opening where the pasta passes to be extruded, a perforated plate (draw-plate), placed in the front of the fairing, a ring nut that fixes the perforated plate and a secondary shaft with the end jutting out of the fairing on the opposite side of the ring nut, connected to a driving device (manual or motorised), a funnel-shaped hopper connected to the compartment that holds the worm screw.

The problem with the funnel-shaped hopper is that it is connected to the cavity that joins the compartment above the worm screw by a tubular section that is rather long, as it is designed to impede the person using the machine (in this case the housewife) from being able to reach the worm screw with her fingers when the dough is being pushed manually down towards the worm screw.

Another problem is that this connecting stretch of the hopper with the opening connected to the compartment that contains the worm screw, virtually always (for construction reasons) gets narrower as it reaches the compartment which means that the dough that is put inside, especially if there is too much, tends to block it. This tendency to block the product inside the connecting stretch of the hopper with the compartment containing the worm screw is mainly caused by the length of the stretch for the safety reasons as described above to protect the user's fingers.

Therefore a tool is needed to push the blocked dough down into the top of the worm screw with the consequent risk of blocking the worm screw against the tool itself. This means that production is stopped and time is wasted.

Another problem with household appliances for drawing fresh pasta, is that they have a horizontal worm screw and the pasta is drawn through a horizontal draw-plate, meaning that long pasta (spaghetti, bigoli, etc.) when it comes out is held by the user's hands and, as it is fresh pasta, the force of gravity naturally lowers it and the pieces of pasta rest on each other with the risk of them sticking together.

Another problem with household appliances for drawing fresh pasta, supported by the jutting part of the structure that transmits the drive to the external end of the secondary shaft, is that the barycentre of the machine is a long way from the supporting part.

FR 2 470 544 A1 discloses the preamble of claim 1.

The main purpose of this patent is to make a household appliance for drawing fresh pasta so that the drawn product comes out vertically to exclude the use of a funnel-shaped hopper and to regulate the flow of pasta.

This would revolutionise the concept of the household appliance for drawing fresh pasta, with the axis of the worm screw placed horizontally and with a front draw-plate, with an appliance that would have the axis of the worm screw placed vertically and the draw-plate facing downwards as defined in claim 1.

Another purpose is to ensure that the distance from the entrance point for the pasta to be drawn to the worm screw is such to impede the user's fingers reaching the worm screw.

Another purpose is to produce a compact structure so that the distance of the jutting part of the machine barycentre from the supporting part is as short as possible.

A possible variation relative to the innovative concept of a vertical worm screw, and a draw-plate positioned in the bottom of the appliance and facing downwards so that the extruded pasta comes out vertically, is to substitute the edged loading plate with a gap with u-bolts for introducing the pasta, with a fixed or removable hopper.

The above is explained in the attached Design Plates.

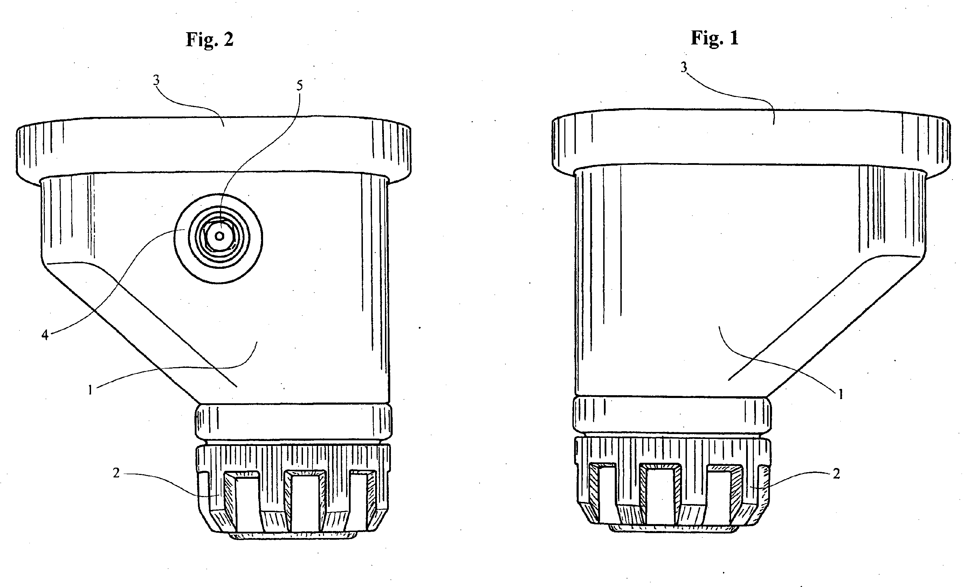

Figure 1 shows a front view of the machine with respect to the structure (not shown) that holds it up and transmits drive.

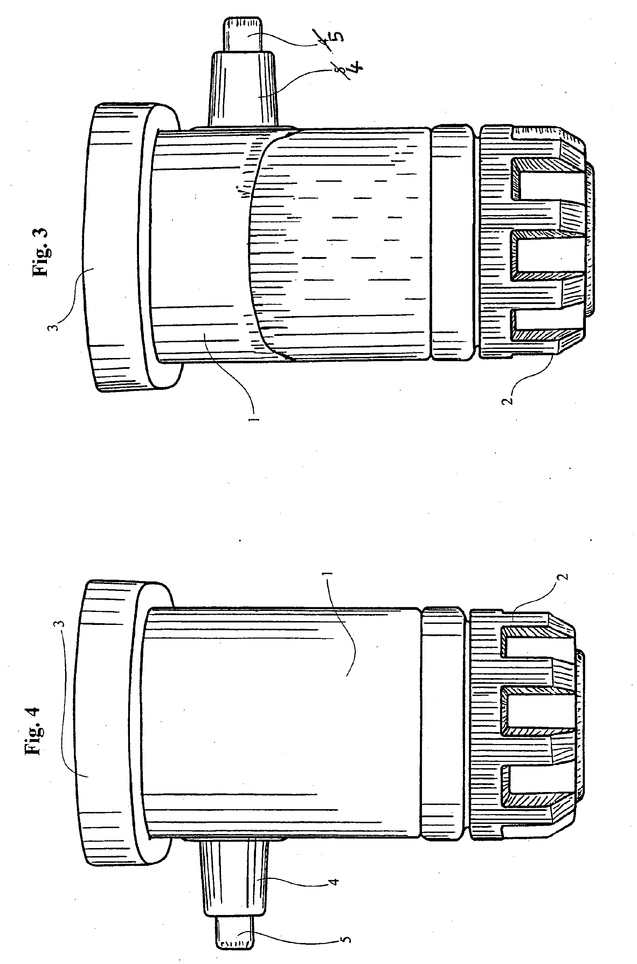

Figure 2 shows a view of the opposite side of the machine to that in figure 1, with a tubular supporting bracket with the jutting part of the secondary shaft (gripping point) that receives the drive and transmits it (through a coupling) to the worm screw. Figure 3 shows the right side of the machine from a front view, with the opening gap in the top that is connected to the compartment that holds the worm screw.

Figure 4 shows the left side of the appliance from a front view, opposite to the view shown in figure 3.

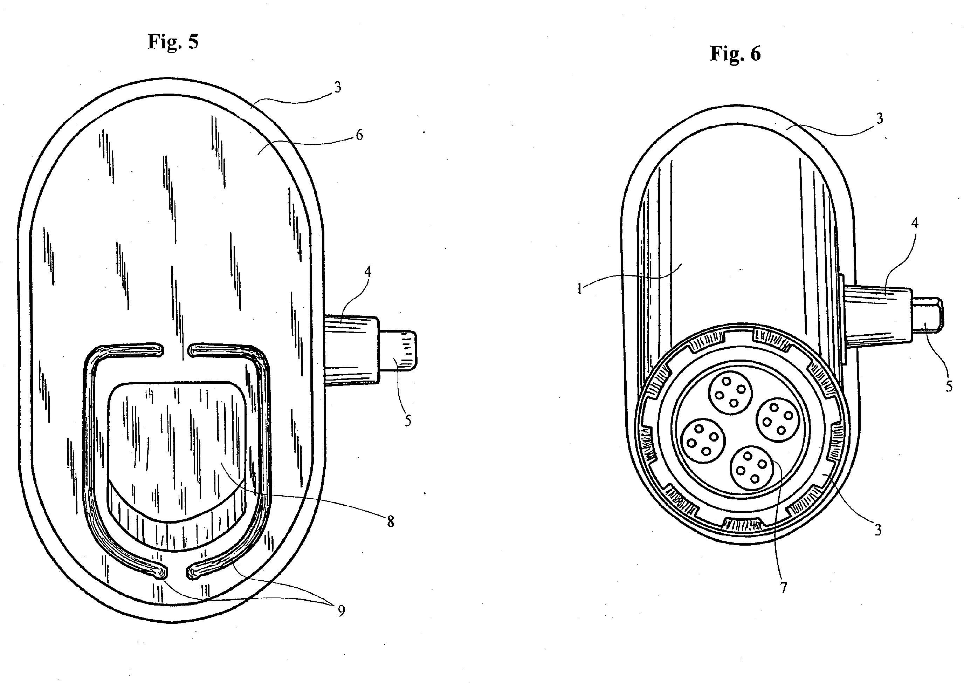

Figure 5 shows the appliance as seen from above, where the edged tray loading plate is seen with a gap surrounded by u-bolts, which is the opening for introducing the pasta to be drawn.

Figure 6 shows the appliance from underneath, where the draw-plate can be seen supported by the nut that is screwed into the fairing.

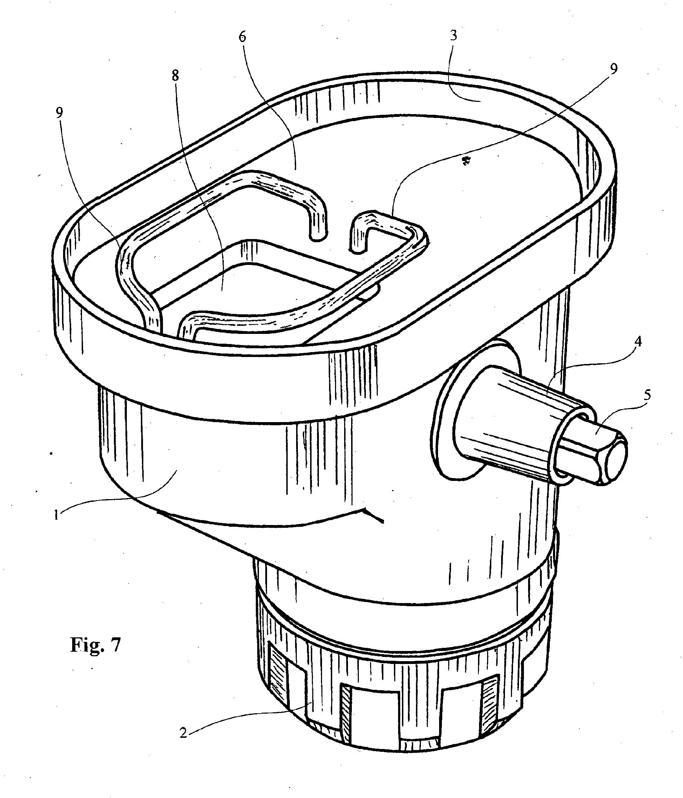

Figure 7 is an axonometric view from above, which shows the compactness of the appliance, and that the barycentre of the unit, including both the loading plate and the draw-plate below, has a much smaller extension with respect to the tubular supporting bracket that the end of the secondary shaft juts out of.

Inside the fairing (1), there is the compartment for the pasta being drawn, where the worm screw turns (which cannot be seen in the figure). On the bottom, facing downwards there is the draw-plate (7) held by an internally screwed ring (2), the construction method and functions of which are already known.

The movement of the internal worm screw is driven by an external force, which is connected to the prismatic end (5) of an auxiliary shaft, by interposing gear work (not shown) housed inside the fairing (1). The material being extruded (to make the fresh pasta) is placed on the plate (6) of the tray configuration (3) and passed through the space marked off by the u-bolts (9), which border the gap (8), and falls into the tubular cavity that is connected to the opening of the compartment (not shown) to be processed by the internal worm screw (not shown).

To work the machine is mounted in a jutting manner, using the tubular bracket (4) on a structure that contains the driving force, which is connected to the prismatic end (5) of the auxiliary shaft (not shown) to drive the worm screw.

The operating method involves sending the product to be extruded to the worm screw, after being loaded on the tray shaped (3) plate (6) and passed through the u-bolts (9) and passed down through the gap (8) to reach the worm screw.

The extruded product comes out of the draw-plate (7) vertically and, depending on the programmed length, is periodically cut to the right size.

Further to this explanation, we can see the revolutionary innovation in a household appliance to make fresh pasta with the worm screw shaft placed vertically and the draw-plate placed at the bottom, which means the drawn pasta comes out vertically, avoiding that it falls onto itself and making the sequence of operations easier, permitting the user to make programmed stops, with intervals in the pasta coming out, which can remain momentarily suspended before it is cut.

## Claims

1. Household appliance for drawing fresh pasta comprising a fairing (1), a compartment and a vertical worm screw being inside the fairing, a draw plate (7) facing downwards for extruding the pasta vertically, **characterised in that** it further comprises an edged tray loading plate (3, 6) with a gap (8) which is the opening for introducing the pasta, u-bolts (9) surrounding the gap (9), wherein the u-bolts (9) mark off a space for passing the pasta through, said space bordering the gap (8).

2. Household appliance according to claim 1, further **characterised in that** the internal configuration of the stretch that goes from the dough entrance gap (8) to the worm screw is long enough to guarantee prevention against accident to the user's hands due to the fingers coming into contact with the worm screw.

## Patentansprüche

1. Haushaltsgerät zur Herstellung von frischen Nudeln bestehend aus einem Gehäuse (1) und Innenraum, eine Scheckenschraube befindet sich innerhalb des Gehäuses, eine nach unten zeigende Matrize (7) zum senkrechten Herauspressen der Nudeln, dadurch charakterisiert, dass es zusätzlich eine mit Rahmen versehene Beladungsplatte (3, 6) mit Spalt (8), der die Einführöffnung für den Nudelteig darstellt und U-Bügel (9), die den Spalt umgeben, umfasst. Die U-Bügel begrenzen den Platz für den Durchtritt des Teigs, sogenannter Platz, der den Spalt umrahmt.

2. Haushaltsgerät gemäß Anspruch 1, weiterhin dadurch charakterisiert, dass die innere Anordnung des Stücks, das von der Teigeintritt-Spalte (8) zur Scheckenschraube führt, lang genug ist, um Unfälle an den Händen des Anwenders aufgrund von Kontakt der Finger mit der Schneckensschraube zu vermeiden.

## Revendications

1. Appareil ménager pour confectionner des pâtes fraiches comprenant un corps (1) et compartiment avec vis sans fin verticale à l'intérieur du corps, une plaque à étirer (7), face vers le fond, pour extruder la pâte verticalement, **caractérisé en outre par le fait qu'**il comprend également une plaque de chargement à plateau tranchant (3, 6) avec un interstice (9) pour introduite la pâte, des boulons en U autour de l'interstice (9), des boulons en U (9) délimitant un espace pour passer la pâte, cet espace étant au bord de l'interstice (8).

2. Appareil ménager selon revendication 1, **caractérisé en outre par le fait que** la configuration interne du passage allant de l'interstice d'entrée de la pâte (8) jusqu'à la vis sans fin, est assez longue pour garantir que l'utilisateur ne se blesse pas aux mains parce que ses doigts seraient entrés en contact avec la vis sans fin.
